# EUROPEAN PATENT SPECIFICATION

(11) **EP 1 546 924 B1**
(45) Date of publication and mention of the grant of the patent: **10.01.2007**
(21) Application number: 03748342.7
(22) Date of filing: 26.09.2003
(51) Int. Cl.: G06F 17/30

(54) **METHOD, SYSTEM, AND PROGRAM FOR MAINTAINING DATA IN DISTRIBUTED CACHES**
VERFAHREN, SYSTEM UND PROGRAMM ZUR VERWALTUNG VON DATEN IN VERTEILTEN CACHESPEICHERN
PROCEDE, SYSTEME, ET PROGRAMME DE MAINTIEN DE DONNEES DANS DES MEMOIRES CACHES REPARTIES

(30) Priority: 27.09.2002 US 259945
(43) Date of publication of application: 29.06.2005
(73) Proprietor: International Business Machines Corporation, Armonk, N.Y. 10504 (US)
(72) Inventor: JOHNSON, Sandra, Austin, TX 78727 (US)
(74) Representative: Williams, Julian David
(86) International application number: PCT/GB2003/004193
(87) International publication number: WO 2004/029834

(56) References cited:
- OUSTERHOUT J K ET AL: "THE SPRITE NETWORK OPERATING SYSTEM" COMPUTER, IEEE COMPUTER SOCIETY, LONG BEACH., CA, US, US, vol. 21, no. 2, 1 February 1988 (1988-02-01), pages 23-36, XP000111082 ISSN: 0018-9162
- CHALLENGER J ET AL: "A scalable system for consistently caching dynamic Web data" INFOCOM '99. EIGHTEENTH ANNUAL JOINT CONFERENCE OF THE IEEE COMPUTER AND COMMUNICATIONS SOCIETIES. PROCEEDINGS. IEEE NEW YORK, NY, USA 21-25 MARCH 1999, PISCATAWAY, NJ, USA,IEEE, US, 21 March 1999 (1999-03-21), pages 294-303, XP010323770 ISBN: 0-7803-5417-6
- GADDE S ET AL: "A Taste of Crispy Squid" PROCEEDINGS OF THE WORKSHOP ON INTERNET SERVICE PERFORMANCE, XX, XX, June 1998 (1998-06), pages 1-8, XP002197617
- SATYANARAYANAN M: "A survey of distributed file systems" TECHNICAL REPORT CMU-CS-89-116, XX, XX, February 1989 (1989-02), XP002260895
- ANDERSON T E ET AL: "SERVERLESS NETWORK FILE SYSTEMS" ACM TRANSACTIONS ON COMPUTER SYSTEMS, ASSOCIATION FOR COMPUTING MACHINERY. NEW YORK, US, vol. 14, no. 1, 1 February 1996 (1996-02-01), pages 41-79, XP000584662 ISSN: 0734-2071

## Description

### BACKGROUND OF THE INVENTION

### Field of the Invention

The present invention relates to a method, system, and program for method, system, and program for maintaining data in distributed caches.

### Description of the Related Art

Internet users often request data from a central Internet server. One challenge Internet information providers face is the goal to maintain a timely response rate for returning information to user requests while the amount of Internet traffic and users increases at exponential rates. One solution to this need to service an increasing number of users is to maintain copies of data at different locations so user data requests are serviced from mirror servers at different geographical locations to service users most proximate to that mirror server. Other solutions involve the use of distributed caches that maintain copies of data, where a central directory is maintained to keep track of data at the distributed cache servers. The cache servers can be deployed at different. points in an organization to service particular groups of client users. The central directory provides mapping to maintain information on the objects within the cache servers.

The Caching and Replication Internet Service Performance (CRISP) project has developed an Internet caching service utilizing distributed proxy caches structured as a collection of autonomous proxy servers that share their contents through a mapping service.

It is known from Ousterhout JK et al., "The Sprite Network Operating System", Computer, IEEE Computer Society, Long Beach CA, USA, US(01-02-1998), 21(2), 23-36 to have multiple caches that maintain write consistency by each maintaining information about the last writer for each file, and, when a client other than the last writer opens the file, having the last writer write back all dirty blocks to a server cache. It is also known, from Anderson T et al., "Serverless Network File Systems", ACM Transactions on Computer Systems", ACM, New York, USA (01-02-1996), 14(1), to have update information maintained for the objects in a cache, where different caches may have different versions of objects. It is further known from Keleher P et al., "Lazy Release Consistency for Software Shared Memory", COMPUTER ARCHITECTURE NEWS, 1992-05-01, ACM, New York, USA to have a modification applied if the update information indicates that the target data is modified.

Notwithstanding the current uses of distributed caches to service client Web access requests, there is a continued need in the art to provide further improved techniques for servicing client network requests, such as Internet Web requests.

### SUMMARY OF THE DESCRIBED IMPLEMENTATIONS

In a first aspect, the present invention provides a method for maintaining data in a plurality of distributed caches, comprising: maintaining a copy of an object in at least one cache, wherein multiple caches may have different versions of the object, and wherein the objects are capable of having modifiable data units; maintaining update information at each cache for each object maintained in the cache, wherein the update information for each object in each cache indicates the object, the cache including the object, and indicates whether each data unit in the object was modified; and after receiving a modification to a target data unit in one target object in one target cache, updating the update information for the target object and target cache to indicate that the target data unit is modified, wherein the update information for the target object indicates that the target data unit is not modified in any other cache; wherein said caches may contain different versions of said object and said caches may deliver obsolete version of said object to clients of said caches.

The method preferably further performs after receiving the request to modify the data unit: if the update information for the target object and target cache indicate that the target data unit is modified, then applying the received modification to the data unit in the target object in the target cache.

The method preferably further performs after receiving the modification: if the update information for the target object and target cache indicate that the target data unit is not modified, then determining whether another cache includes the target object and a most recent target data unit value; if another cache does not include the most recent target data unit value, then applying the modification to the data unit in the target object in the target cache; and updating the update information for the target object and target cache to indicate that the target data unit is modified, wherein the update information for the target object in any other cache indicates that the data unit is not modified.

The method preferably further performs after receiving the modification: if the update information for the target object and target cache indicate that the target data unit is not modified, then determining whether another cache includes the target object and a most recent target data unit value; and if another cache includes the most recent target data unit value, then retrieving the most recent target data unit value from the determined cache and updating the target object in the target cache with the retrieved most recent target data unit value.

The method preferably further comprises: after updating the target object in the target cache with the most recent target data unit value, applying the received modification to the data unit in the target object in the target cache; and updating the update information for the target object and target cache to indicate that the target data unit is modified, wherein the update information for the target object in any Other cache indicates that the data unit is not modified.

Preferably, a central server performs the steps of determining whether another cache includes the target object and the most recent target data unit value and retrieving the most recent target data unit value from the other cache, further comprising: returning, with the central server, the most recent target data unit value, wherein the modification to the target data unit is applied to the target cache after the most recent target data unit value is applied to the target cache and, wherein one cache server is coupled to each cache, and wherein each cache server maintains update information for each object in the at least one cache to which the cache server is coupled, and therein the central server maintains update information for each object in each cache.

The method preferably further comprises: maintaining invalidation information for each object in each cache, wherein the invalidation information for one object in one cache indicates whether each data unit in the object is valid or invalid; if the invalidation information for the target object and target cache indicate that the target data unit is invalid, then determining from the update information the cache that includes a most recent target data unit value for the target object; retrieving the most recent target data unit value from the determined cache and updating the target object in the target cache with the most recent target data unit value; after updating the target object in the target cache with the most recent target data unit value, applying the received modification to the target data unit in the target object in the target cache; updating the update information for the target object and target cache to indicate that the target data unit is modified; updating the invalidation information for each cache that includes the target object to indicate that the target data unit is invalid; and updating the update information for the target object in the determined cache to indicate that the data unit is not modified.

Preferably, a central server performs the steps of determining whether the invalidation information for the target object and target cache indicates that the target data unit is invalid, determining the cache that includes the target object and the most recent target data unit value, and retrieving the most recent target data unit value from the determined cache, further comprising: returning, by the central server, the most recent target data unit value, wherein the modification to the target data unit is applied to the target cache after the most recent target data unit value is applied to the target object in the target cache.

Preferably, one cache server is coupled to each cache, and wherein each cache server maintains update information for each object in the at least one cache to which the cache server is coupled, and wherein the central server maintains update information and invalidation information for each object in each cache, further comprising: determining, by a target cache server that received the modification to the target data unit, whether the update information for the target object and target cache indicate that the target data unit is modified; and updating, by the target cache server, the data unit in the target object in the target cache after determining that the update information for the target object and target cache indicate that the target data unit is modified.

The method preferably further comprises: sending, by the target cache server, a request to the central server to modify the target data unit; and returning, by the central server, a message to the target cache server to proceed with the modification that (i) does not include the most recent target data unit value if no other cache had the most recent target data unit value or (2) includes the most recent target data unit value if another cache had the most recent target data unit value; and applying, by the target cache server, the received most recent target data unit value to the target page in the target cache before applying the received modification to the target data unit value.

In a second aspect, the present invention provides a system for maintaining data, comprising: a plurality of distributed caches; means for maintaining a copy of an object in at least one cache, wherein the caches may have different versions of the object, and wherein the objects are capable of having modifiable data units; means for maintaining update information at each cache for each object maintained in said cache, wherein the update information for each object in each cache indicates the object, the cache including the object, and indicates whether each data unit in the object was modified; and means for updating the update information for the target object and target cache to indicate that the target data unit-is modified after receiving a modification to a target data unit in one target object in one target cache, wherein the update information for the target object indicates that the target data unit is not modified in any other cache; wherein said caches may contain different versions of said object and said caches may deliver obsolete version of said object to clients of said caches.

The system preferably further comprises means for applying the received modification to the data unit in the target object in the target cache after receiving the request to modify the data unit and if the update information for the target object and target cache indicate that the target data unit is modified.

The system preferably further comprises means for performing after receiving the modification: determining whether another cache includes the target object and a most recent target data unit value if the update information for the target object and target cache indicate that the target data unit is not modified; applying the modification to the data unit in the target object in the target cache if another cache does not include the most recent target data unit value; and updating the update information for the target object and target cache to indicate that the target data unit is modified, wherein the update information for the target object in any other cache indicates that the data unit is not modified.

The system preferably further comprises means for performing after receiving the modification: determining whether another cache includes the target object and a most recent target data unit value if the update information for the target object and target cache indicate that the target data unit is not modified; and retrieving the most recent target data unit value from the determined cache and updating the target object in the target cache with the retrieved most recent target data unit value if another cache includes the most recent target data unit value.

The system preferably further comprises means for maintaining invalidation information for each object in each cache, wherein the invalidation information for one object in one cache indicates whether each data unit in the object is valid or invalid.

The system preferably further comprises: means for determining from the update information the cache that includes a. most recent target data unit value for the target object if the invalidation information for the target object and target cache indicate that the target data unit is invalid; and means for retrieving the most recent target data unit value from the determined cache and updating the target object in the target cache with the most recent target data unit value.

Preferably, a central server implements the means for determining whether the invalidation information for the target object and target cache indicates that the target data unit is invalid, determining the cache that includes the target object and the most recent target data unit value, and retrieving the most recent target data unit value from the determined cache, further comprising: means for returning, performed by the central server, the most recent target data unit value, wherein the modification to the target data unit is applied to the target cache after the most recent target data unit value is applied to the target object in the target cache.

In a third aspect, the present invention provides a computer program comprising computer program code to, when loaded into a computer system and executed thereon, cause said computer system to perform all the steps of a method according to the first aspect.

Preferably, the present invention provides an article of manufacture for maintaining data in distributed caches, wherein the article of manufacture causes operations to be performed, the operations comprising: maintaining a copy of an object in at least one cache, wherein multiple caches may have different versions of the object, and wherein the objects are capable of having modifiable data units; maintaining update information for each object maintained in each cache, wherein the update information for each object in each cache indicates the object, the cache including the object, and indicates whether each data unit in the object was modified; and after receiving a modification to a target data unit in one target object in one target cache, updating the update information for the target object and target cache to indicate that the target data unit is modified, wherein the update information for the target object in any other cache indicates that the target data unit is not modified.

The article of manufacture may further perform after receiving the request to modify the data unit: if the update information for the target object and target cache indicate that the target data unit is modified, then applying the received modification to the data unit in the target object in the target cache.

The article of manufacture may further perform after receiving the modification: if the update information for the target object and target cache indicate that the target data unit is not modified, then determining whether another cache includes the target object and a most recent target data unit value; if another cache does not include the most recent target data unit value, then applying the modification to the data unit in the target object in the target cache; and updating the update information for the target object and target cache to indicate that the target data unit is modified, wherein the update information for the target object in any other cache indicates that the data unit is not modified.

The article of manufacture may further perform after receiving the modification: if the update information for the target object and target cache indicate that the target data unit is not modified, then determining whether another cache includes the target object and a most recent target data unit value, and if another cache includes the most recent target data unit value, then retrieving the most recent target data unit value from the determined cache and updating the target object in the target cache with the retrieved most recent target data unit value.

The article of manufacture may further perform: after updating the target object in the target cache with the most recant target data unit value, applying the received modification to the data unit in the target object in the target cache; and updating the update information for the target object and target cache to indicate that the target data unit is modified, wherein the update information for the target object in any other cache indicates that the data unit is not modified.

The article of manufacture may be one wherein a central server performs the steps of determining whether another cache includes the target object and the most recent target data unit value and retrieving the most recent target data unit value from the other cache, further comprising: returning, with the central server, the most recent target data unit value, wherein the modification to the target data unit is applied to the target cache after the most recent target data unit value is applied to the target cache.

The article of manufacture may be one wherein one cache server is coupled to each cache, and wherein each cache server maintains update information for each object in the at least one cache to which the cache server is coupled, and wherein the central server maintains update information for each object in each cache.

The article of manufacture may be one further comprising: maintaining invalidation information for each object in each cache, wherein the invalidation information for one object in one cache indicates whether each data unit in the object is valid or invalid.

The article of manufacture may be one further comprising: if the invalidation information for the target object and target cache indicate that the target data unit is invalid, then determining from the update information the cache that includes a most recent target data unit value for the target object; and retrieving the most recent target data unit value from the determined cache and updating the target object in the target cache with the most recent target data unit value.

The article of manufacture may be one further comprising: after updating the target object in the target cache with the most recent target data unit value, applying the received modification to the target data unit in the target object in the target cache; updating the update information for the target object and target cache to indicate that the target data unit is modified; and updating the invalidation information for each cache that includes the target object to indicate that the target data unit is invalid.

The article of manufacture may be one further comprising: updating the update information for the target object in the determined cache to indicate that the data unit is not modified.

The article of manufacture may be one wherein a central server performs the steps of determining whether the invalidation information for the target object and target cache indicates that the target data unit is invalid, determining the cache that includes the target object and the most recent target data unit value, and retrieving the most recent target data unit value from the determined cache, further comprising: returning, by the central server, the most recent target data unit value, wherein the modification to the target data unit is applied to the target cache after the most recent target data unit value is applied to the target object in the target cache.

The article of manufacture may be one wherein one cache server is coupled to each cache, and wherein each cache server maintains update information for each object in the at least one cache to which the cache server is coupled, and wherein the central server maintains update information and invalidation information for each object in each cache, further comprising: determining, by a target cache server that received the modification to the target data unit, whether the update information for the target object and target cache indicate that the target data unit is modified; and updating, by the target cache server, the data unit in the target object in the target cache after determining that the update information for the target object and target cache indicate that the target data unit is modified.

The article of manufacture may be one further comprising: sending, by the target cache server, a request to the central server to modify the target data unit; and returning, by the central server, a message to the target cache server to proceed with the modification that (i) does not include the most recent target data unit value if no other cache had the most recent target data unit value or (2) includes the most recent target data unit value if another cache had the most recent target data unit value; and applying, by the target cache server, the received most recent target data unit value to the target page in the target cache before applying the received modification to the target data unit value.

Provided are a method, system, and program for maintaining data in distributed caches. A copy of an object is maintained in at least one cache, wherein multiple caches may have different versions of the object, and wherein the objects are capable of having modifiable data units. Update information is maintained for each object maintained in each cache, wherein the update information for each object in each cache indicates the object, the cache including the object, and indicates whether each data unit in the object was modified. After receiving a modification to a target data unit in one target object in one target cache, the update information for the target object and target cache is updated to indicate that the target data unit is modified, wherein the update information for the target object in any other cache indicates that the target data unit is not modified.

In further implementations, after receiving the request to modify the data unit and if the update information for the target object and target cache indicate that the target data unit is modified, the received modification is applied to the data unit in the target object in the target cache.

Still further, after receiving the modification and if the update information for the target object and target cache indicate that the target data unit is not modified, a determination may be made as to whether another cache includes the target object and a most recent target data unit value. If another cache does not include the most recent target data unit value, then the modification is applied to the data unit in the target object in the target cache and the update information for the target object and target cache is updated to indicate that the target data unit is modified, wherein the update information for the target object in any other cache indicates that the data unit is not modified.

In yet further implementations, after receiving the modification and if the update information for the target object and target cache indicate that the target data unit is not modified, then a determination is made as to whether another cache includes the target object and a most recent target data unit value. If another cache includes the most recent target data unit value, then the most recent target data unit value is retrieved from the determined cache and the target object in the target cache is updated with the retrieved most recent target data unit value.

Still further, invalidation information may be maintained for each object in each cache, wherein the invalidation information for one object in one cache indicates whether each data unit in the object is valid or invalid.

Described implementations provide techniques for managing the distributed storage of data objects in a plurality of distributed caches in a manner that avoids any inconsistent data operations from being performed with respect to the data maintained in the distributed caches.

### BRIEF DESCRIPTION OF THE DRAWINGS

A preferred embodiment of the present invention will now be defined, by way fo example only, with reference tro the accompanying drawings, in which:
FIG. 1 illustrates a distributed network computing environment in which aspects of the invention are implemented;
FIGs. 2 and 3 illustrate data structures to maintain information on data maintained at different caches in the network computing environment;
FIG. 4 illustrates logic to process a request for an object or page in accordance with implementations of the invention;
FIGs. 5 and 6 illustrate logic to return an object or page to a cache in accordance with implementations of the invention;
FIG. 6 illustrate logic to process a request to modify an object in cache in accordance with implementations of the invention;
FIG. 7 illustrates an architecture of computing components in the network environment, such as the cache servers and central servers, and any other computing devices.

### DETAILED DESCRIPTION OF THE PREFERRED EMBODIMENTS

In the following description, reference is made to the accompanying drawings which form a part hereof and which illustrate several embodiments of the present invention. It is understood that other embodiments may be utilized and structural and operational changes may be made without departing from the scope of the present invention.

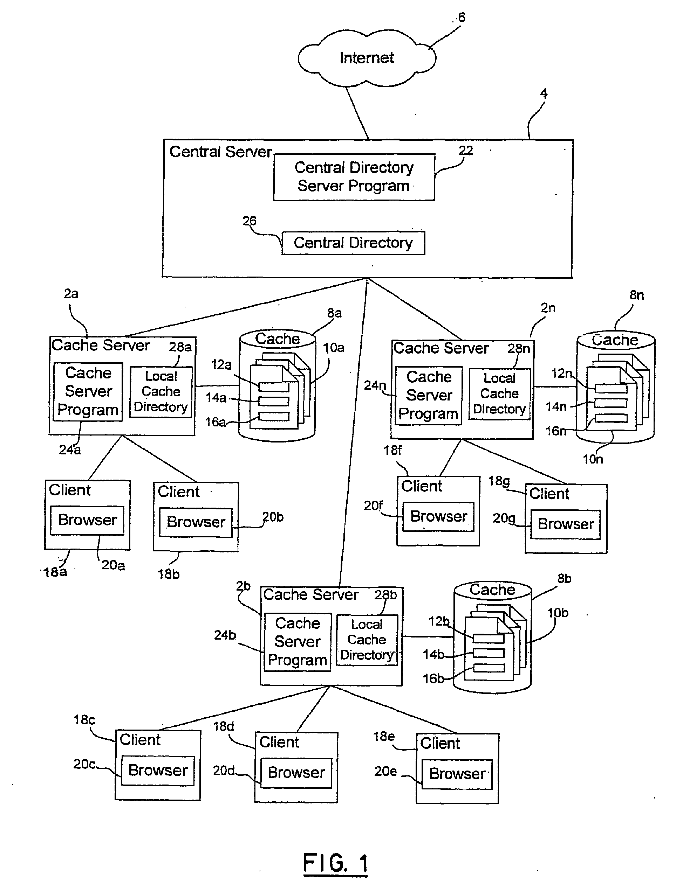

FIG. 1 illustrates a network computing environment in which aspects of the invention may be implemented. A plurality of cache servers 2a, 2b...2n connect to a central server 4, where the central server 4 is connected to the Internet 6, or any other type of network known in the art. The cache and central servers 2a, 2b...2n may comprise any type of computing device known in the art, including server class machines, workstations, personal computers, etc. The cache servers 2a, 2b...2n are each coupled to a cache 8a, 8b...8n which store as memory pages 10a, 10b...10n web pages downloaded from over the Internet 6. Each of the memory pages 10a, 10b...10n may include objects or components, referred to herein as data units 12a, 12b...12n, 14a, 14b...14n, and 16a, 16b...16n, where the data units may be modified. The data units may comprise any degree of granularity within the memory pages 10a, 10b...10n, including a word, a field, a line, a frame, the entire page, a paragraph, an object, etc. Although FIG. 1 shows each cache 8a, 8b...8n as including a same number of pages, where each page has a same number of data units, in described implementations, each cache 8a, 8b...8n may maintain a different number of memory pages and different memory pages, where each memory page may have a different number of data units. The memory pages in the different caches 8a, 8b...8n may represent web pages downloaded from different Internet web servers at different Internet addresses, e.g., Universal Resource Locators (URL), etc. The memory pages may store web pages in the same file format or in different file formats. The memory pages may include content in any media file format known in the art, such as Hypertext Language Markup (HTML), Extensible Markup Language (XML), a text file, move file, picture file, sound file, etc.

A plurality of client systems 18a, 18b, 18c, 18d, 18e, 18f, 18g include browsers 20a, 20b, 20c, 20d, 20e, 20f, 20g that communicate requests for web pages to a designated cache server 2a, 2b...2n, such that the client requests may be serviced from the caches 8a, 8b...8n. The client systems 18a, 18b...18g may comprise any computing device known in the art, such as as a personal computer, laptop computer, workstation, mainframe, telephony device, handheld computer, server, network appliance, etc., and the browser 20a, 20b...20g may comprise any program capable of requesting files over a network, such as an Internet browser program, movie player, sound player, etc., and rendering the data from such files to the user in any media format known in the art. In certain implementations, a user at the browsers 20a, 20b...20g may modify or update data in the data units in the memory pages in the caches 8a, 8b...8n.

The central server 4 includes a central server directory program 22 and the cache servers 2a, 2b...2n each include a cache server program 24a, 24b...24n to perform caching related operations. The central server directory program 22 maintains a central directory 26 maintaining information on the data units that may be updated in each memory page in each cache 8a, 8b...8n. Each cache server program 24a, 24b...24n also maintains a local cache directory 28a, 28b...28n having entries maintaining information on the data units that may be updated in the memory pages 10a, 10b...10n in local cache 8a, 8b...8bn. The entries in the local cache directories 28a, 28b...28n correspond to entries for the same memory pages in the central directory 26.

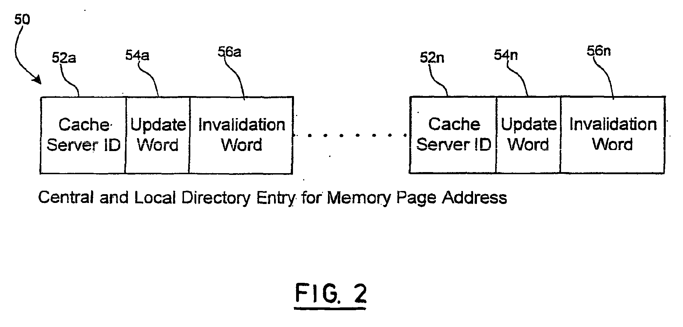

FIG. 2 illustrates the format 50 of the entries maintained in the central directory 26 and local cache directories 28a, 28b...28n. Each entry 50 includes one or more tuples of information for each local cache directory 28a, 28b...28n maintaining a copy of the page corresponding to the entry in the local cache 8a, 8b...8n. Each entry 50 corresponds to a specific memory page address, where the different caches 8a, 8b...8n may maintain a copy of the page. Each tuple of information maintained for each cache 8a, 8b...8n that has a copy of the page includes:
Cache Server ID 52a...52n: indicates the specific cache server 2a, 2b...2n that includes the memory page represented by the entry.
This information may be optional in the entries in the local cache directories 28a, 28b...28n.
Update Word 54a...54n: each word has a plurality of bits, where one bit is provided for each updateable data unit in the-page represented by the update word. Each bit is set "on" if the data unit in the page in the cache 8a, 8b...8n has been modified, and set "off" if the corresponding data unit has not been modified.
Invalidation Word 56a....56n: A word of bits, where there is one bit corresponding to each memory page 10a, 10b...10n in the caches 8a, 8b...8n. A bit is set "on" to indicate that the data at that data unit in the memory page at the local cache 8a, 8b...8n represented by such bit is invalid or updated, and "off" to indicate that no data unit in the memory page at the local cache 8a, 8b...8n is updated or invalid. This word may be optional for the entries in the local cache directories 28a, 28b...28n.

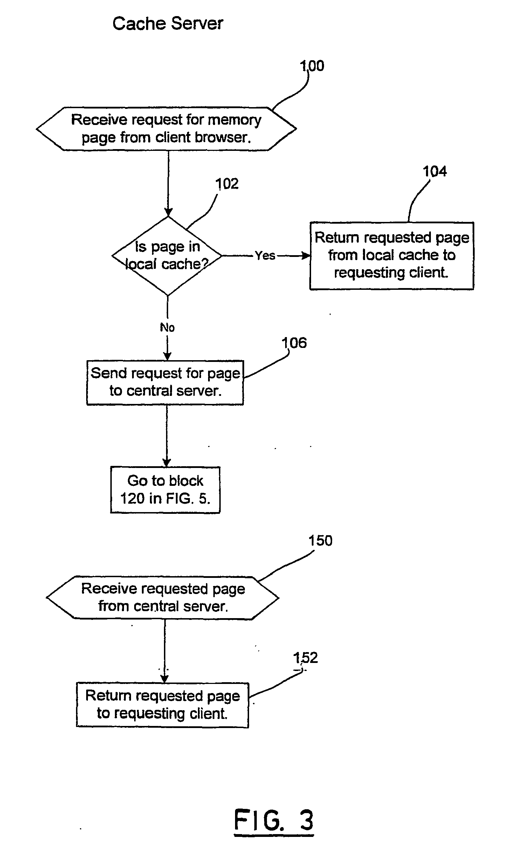

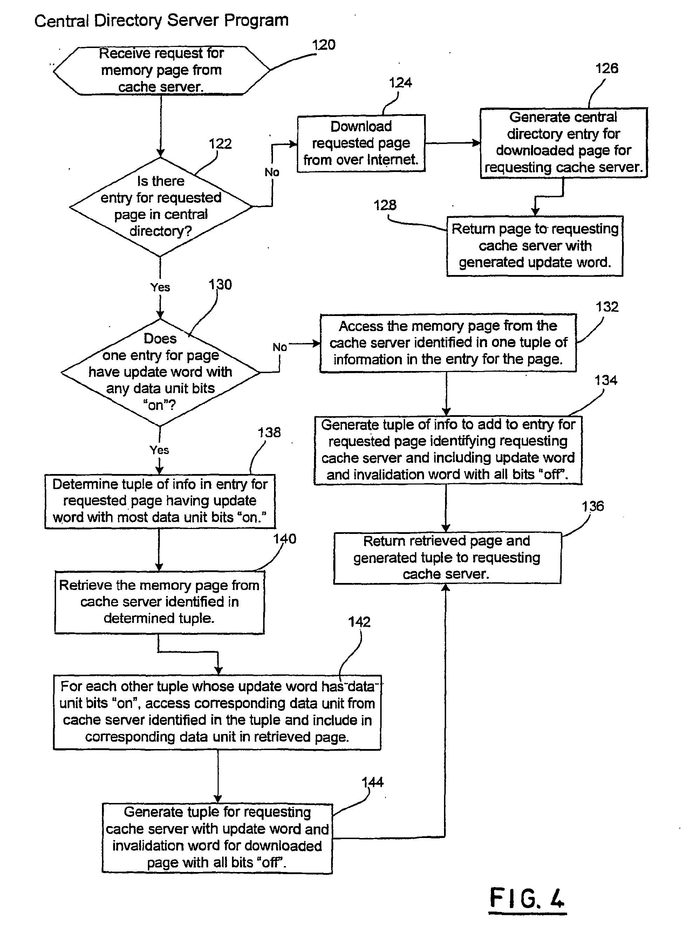

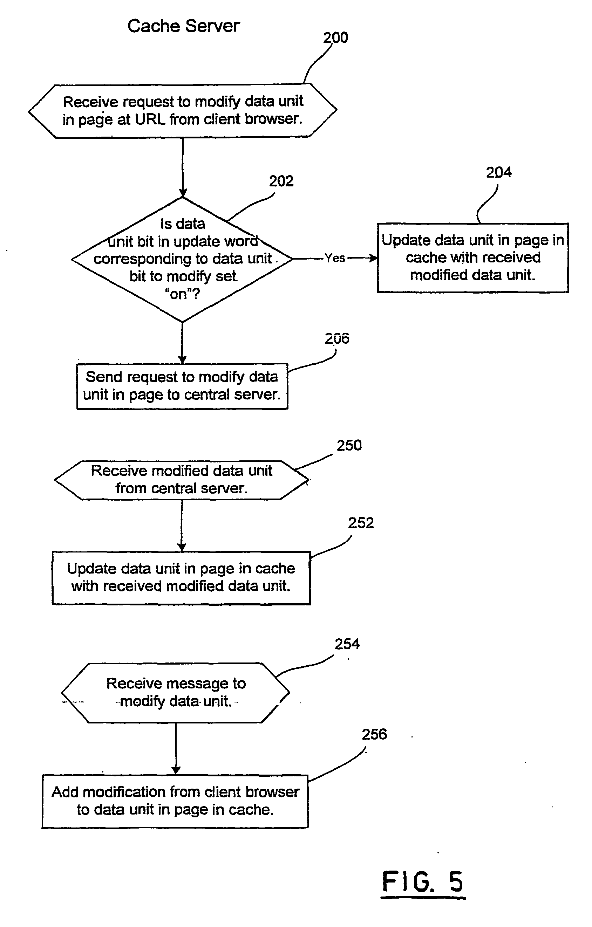

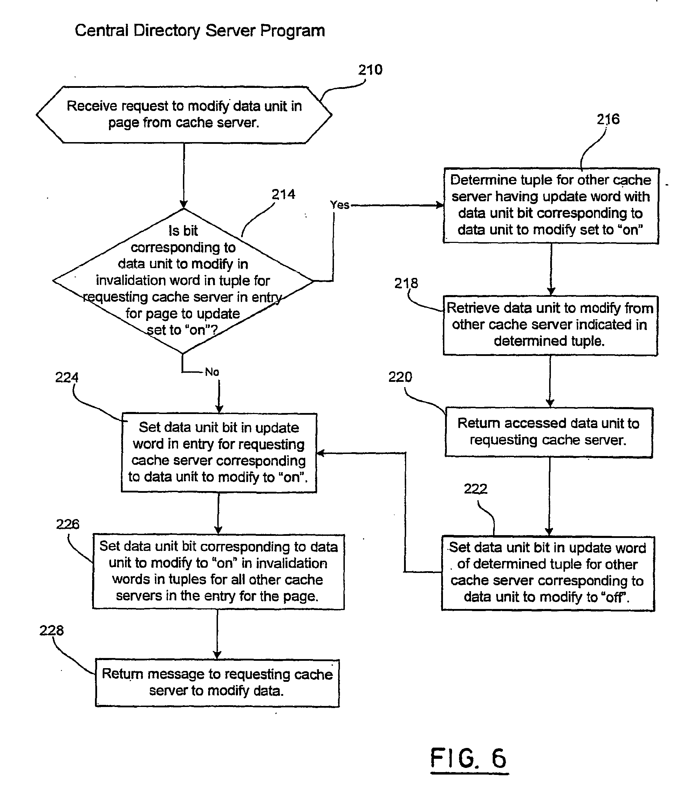

FIGs. 3 and 5 illustrate logic implemented in the cache server programs 24a, 24b...24n and FIGs. 4 and 6 illustrates logic implemented in the central directory server program 22 to coordinate access to memory pages and data units therein to ensure that data consistency is maintained in a manner that allows the clients 18a, 18b...18g fast access to the data.

FIGs. 3 and 4 illustrates operations performed by the cache server programs 24a, 24b..24n and the central directory server program 22, respectively, to provide a client browser 20a, 20b...20n read access to a memory page that is part of a requested web page. With respect to FIG. 4, control begins at block 100 with the cache server program 24a, 24b...24n receiving a request for a memory page from one of the browsers 20a, 20b...20g. In certain implementations, each client 18a, 18b...18g would direct all its page requests to one designated cache server 2a, 2b...2n. Alternatively, each client may direct requests to one of many designated alternative cache servers. In response to receiving the request, if (at block 102) the requested page is in the cache 8a, 8b...8n coupled to the receiving cache server 2a, 2b...2n, then the cache server program 24a, 24b...24n returns (at block 104) the requested memory page from the cache 8a, 8b...8n. In such implementations, the cache server program 24a, 24b...24n provides immediate access from cache 8a, 8b...8n to a page, however the returned page may not have the most recent copy of values for certain data units. If the requested page is not in the attached cache 8a, 8b...8n, then the cache server program 24a, 24b...24n sends (at block 106) a request for the requested page to the central server 4, and control proceeds to block 120 in FIG. 4 where the central directory server program 22 processes the request.

With respect to FIG. 4, in response to receiving (at block 120) a request for a memory page, the central directory server program 22 determines (at block 122) whether the central directory 26 includes an entry for the requested page. If not, then the central directory server program 22 downloads (at block 124) the requested page from over the Internet 6. An entry 50 in the central directory 26 is generated (at block 126) for the retrieved page, where the generated entry 50 identifies the cache server 2a, 2b...2n that initiated the request in the cache server ID field 52a....52n, and includes an update word 54a...54n and invalidation word 56a....56n with all data unit bits (FIGs. 2 and 3) initially set "off". The retrieved page and the generated entry 50 are then returned (at block 128) to the requesting cache server 2a, 2b...2n to buffer in local cache 8a, 8b...8n and maintain the new received entry in the local cache directory 28a, 28b...28n.

If (at block 122) there is an entry in the central directory 26 for the requested page and if (at block 130) there is no entry whose update word 54a...54n for the requested page, having data unit bits 54a...54n (FIG. 2) set "on", indicating no other cache server 2a, 2b...2n has updated data units 12a, 12b...12n, 14a, 14b...14n, and 16a, 16b...16n for the requested page, then the central directory server program 22 accesses (at block 132) the requested page from one cache server 2a, 2b...2n identified in the cache server ID field 52a...52n in one tuple of information in the entry 50 for the requested page. Because no cache server 2a, 2b...2n maintains data units with updated data, the page can be accessed from any cache 8a, 8b...8n identified in the entry 50. The central directory server program 22 generates (at block 134) a tuple of information to add to the entry 50 for the requested page, where the generated tuple of information identifies the requesting cache server 2a, 2b...2n in field 52a...52n and includes an update word 54a....54n and invalidation word 56a...56n with all the data unit bits 54a....54n and 56a...56n set "off". The retrieved page and generated tuple of information are returned (at block 136) to the requesting cache server 136. Note that in alternative implementations, instead of sending the tuple of information, only the generated update word 54a...54n may be sent.

If (at block 130) one update word 54a...54n in one tuple of information for another cache server 2a, 2b...2n in the entry 50 for the requested page does have one data unit bit set "on", then the central directory server program 22 determines (at block 138) the tuple of information in the entry 50 for the requested page whose update word 54a...54n has the most data unit bits set "on". The central directory server program 22 then retrieves (at block 140) the requested page from the cache server 2a, 2b...2n identified in field 52a...52n of the determined tuple of information, the tuple of info having the greatest number of most recent data unit values. For each other tuple in the entry 50 for the page having an update word 54a....54n with data unit bits set "on", the central directory server program 22 would access (at block 142) the corresponding data units corresponding to the bits set "on" from the cache server 2a, 2b...2n identified in field 52a...52n of the tuple and add the accessed data to the corresponding data units in the retrieved page. A tuple for the entry for the retrieved page is generated (at block 144) for the requesting cache server 2a, 2b...2n identifying in field 52a...52n the requesting cache server and including an update word 54a...54n and invalidation word 56a...56n with all data unit bits set "off". Control then proceeds to block 136 to return the retrieved page and generated tuple (or relevant parts thereof) to the requesting cache server 2a, 2b...2n.

With the logic of FIGs. 3 and 4, a client browser page request is first serviced from the local cache 8a, 8b...n and then a remote cache if there is no copy in the local cache. If there is no copy of the requested page in a local cache or remote cache, then the page is downloaded from over the Internet 6. Because the latency access times are greatest for downloading over the Internet, access performance is optimized by downloading preferably from the local cache, then remote cache, and then finally the Internet. Further, in certain implementations, when receiving a page for the first time stored in remote caches, the returned page includes the most recent values from the data units as maintained in all remote caches.

FIG. 5 illustrates logic implemented in the cache server programs 24a, 24b...24n to handle a request by a client browser 20a, 20b...20g to modify a data unit, referred to as the target data unit in one page, referred to as the target page. Control begins at block 200 with the cache server program 24a, 24b...24n receiving a request to modify a data unit in a page from one client 18a, 18b...18g that is assigned to transmit page requests to the cache server 2a, 2b...2n receiving the request. If (at block 202) the data unit bit in the update word in the local cache directory 28a...28n for the requested page corresponding to the target data unit is set to "on", indicating that the cache server 2a, 2b...2n receiving the request, referred to as the receiving cache server, has the most up-to-date value for the target data unit 12a, 12b...12n, 14a, 14b...14n, 16a, 16b...16n, then the receiving cache server program 24a, 24b...24n updates (at block 204) the data unit in the target page in the cache 8a, 8b...8bn coupled to the receiving cache server 2a, 2b...2n with the received modified data unit. Otherwise, if the update word 54a...54n 28a, 28b...28n at the receiving cache server 2a, 2b...2n does not have the bit corresponding to the target data unit set to "on", then the receiving cache server program 24a, 24b...24n sends (at block 202) a request to modify the target data unit in the target page to the central server 4.

FIG. 6 illustrates operations performed by the central directory server program 22 in response to a request from the receiving cache server 2a, 2b...2n (at block 206 in FIG. 5) to modify the target data unit in the target page. In response to receiving such a request (at block 210), the central directory server program 22 determines (at block 214) whether the data unit bit corresponding to the target data unit in the invalidation word 56a...56 in the tuple for the receiving cache server 2a, 2b...2n (indicated in field 52a...52n) in the entry 50 for the requested page is set to "on", indicating "invalid". If so, then another cache server 2a, 2b...2n has modified the target data unit. In such case, the central directory server program 22 determines (at block 216) the tuple in the entry for the other cache server 2a, 2b...2n having an update word 56 with the target data unit bit 56 (FIG. 2) set to "on", i.e., the entry for the cache server that has the most recent data for the subject data unit. The central directory server program 22 then retrieves (at block 218) the most recent value of the target data unit from the other cache server 2a, 2b...2n indicated in the determined tuple and returns (at block 220) the retrieved most recent data unit value to the receiving cache server. In the determined tuple, the target data unit bit in the update word 54a...54n for the other cache server 2a, 2b...2n is set (at block 222) to "off" because after the update operation, the receiving cache server will update the target data unit and have the most recent value for the target data unit.

After providing the receiving cache server with the most recent data value (from block 222) or if the receiving cache server does have the most recent value for the target data unit (from the no branch of block 214), control proceeds to block 224 and 226 where the central directory server program 22 sets (at block 224) in the entry for the requesting cache server, the data unit bits corresponding to the target data unit in the update word 54a...54n to "on" and the bits in the invalidation word 56a....56n in the entry for the requesting cache server to "off". The central directory server program 22 also sets (at block 226) the data unit bit in the invalidation words 56a...56n in the tuples in the entry 50 for the target page for all other cache servers to "on", indicating that the other cache servers have invalid data for the target data unit in their copy of the target page. The central directory server program 22 then returns (at block 228) a message to the receiving cache server to proceed with modifying the target data unit. The message may also include a message, explicit or implicit, to the requesting cache server to update the relevant bits in their validation and invalidation words for the received page to indicate that the requesting cache server has the most recent update for the data units being updated in the page. In alternative implementations, the central directory server program 22 may return the modified validation and invalidation words.

Upon receiving (at block 250 in FIG. 5) the modified target data unit from the central directory server program 22, the cache server program 24a, 24b...24n updates (at block 252) the target data unit in the target page in its cache 8a, 8b...8n with the received modified data unit. Upon receiving (at block 254) the message to modify the target data unit, the requesting cache server 24a, 24b...24n adds (at block 256) the modified data unit received from the client browser 20a, 20b...20g to the page 10a, 10b...10n in the cache 8a, 8b...8n.

The described implementations provide a protocol for a distributed cache server system to allow updates to be.made at one cache server by a client browser and at the same time maintain data consistency between all cache servers. This also provides a relaxed data update consistency because if the data is updated in a browser, only an invalidated data bit is set in the central directory for the remote cache servers that have a copy of the page including the data unit being modified. No information about updates is contained in the remote cache servers and browsers at the remote cache servers and clients may continue to read pages from local caches that do not have the most recent data unit values. However, if a browser receiving data from a cache server that does not have the most recent data attempts to modify a data unit, then the browser will receive the most recent data before applying the modification.

### Additional Implementation Details

The described techniques for managing a distributed cache server system may be implemented as a method, apparatus or article of manufacture using standard programming and/or engineering techniques to produce software, firmware, hardware, or any combination thereof. The term "article of manufacture" as used herein refers to code or logic implemented in hardware logic (e.g., an integrated circuit chip, Programmable Gate Array (PGA), Application Specific Integrated Circuit (ASIC), etc.) or a computer readable medium, such as magnetic storage medium (e.g., hard disk drives, floppy disks,, tape, etc.), optical storage (CD-ROMs, optical disks, etc.), volatile and non-volatile memory devices (e.g., EEPROMs, ROMs, PROMs, RAMs, DRAMs, SRAMs, firmware, programmable logic, etc.). Code in the computer readable medium is accessed and executed by a processor. The code in which preferred embodiments are implemented may further be accessible through a transmission media or from a file server over a network. In such cases, the article of manufacture in which the code is implemented may comprise a transmission media, such as a network transmission line, wireless transmission media, signals propagating through space, radio waves, infrared signals, etc. Thus, the "article of manufacture" may comprise the medium in which the code is embodied. Additionally, the "article of manufacture" may comprise a combination of hardware and software components in which the code is embodied, processed, and executed. Of course, those skilled in the art will recognize that many modifications may be made to this configuration without departing from the scope of the present invention, and that the article of manufacture may comprise any information bearing medium known in the art.

In described implementations, both an invalidation word and update word is maintained for each tuple of information in each entry in the central server. In alternative implementations, only the update word is maintained. In such implementations, to determine whether the requesting cache server has stale data, the central server would have to process the update words in tuples for the other cache servers to determine if any of the other cache servers have modified the data unit.

In the described implementations, the pages maintained in cache comprised memory pages, where multiple memory pages would store the data for a single web page accessed from a URL over the Internet. Alternatively, the memory pages in cache may comprise web pages.

In described implementations, a central server and central directory server program managed update operations to make sure that the requesting cache server received the most recent data before applying an update. In alternative implementations, the operations described as performed by the central server and central directory server program may be distributed among the cache servers to provide a distributed central directory. In such implementations where the operations performed by the central directory server program are distributed, information maintained in the update words and invalidation words at the central server would be distributed to the cache servers to allow the cache servers to perform distributed cache management operations.

In described implementations, each cache server maintained a copy of the update word for each page maintained in the cache 8a, 8b...8n for the cache server 2a, 2b...2n. Alternatively, the cache servers may not maintain an update word and instead handle all consistency operations through the central server.

The information described as included in the update and invalidation words may be implemented in any one or more data structures known in the art to provide the update and invalidation information. For instance, the update and invalidation information may be implemented in one or more data objects, data records in a database, entries in a table, separate objects, etc.

The pages maintained in the caches may comprise any data object type, including any type of multimedia object in which a client or user can enter or add data to modify the content of the object.

In the described implementations, there is a separate cache server coupled to each cache. The cache and cache server may be in the same enclosed unit or may be in separate units. In alternative implementations, one cache server may be coupled to multiple caches and maintain update information for the multiple coupled caches.

In described implementations, the central server downloaded pages from over the Internet. Alternatively, the central server may download pages from any network, such as an Intranet, Local Area Network (LAN), Wide Area Network (WAN), Storage Area Network (SAN), etc. Further, the cache servers may directly access the Internet to download pages.

The illustrated logic of FIGs. 4-6 shows certain events occurring in a certain order. In alternative implementations, certain operations may be performed in a different order, modified or removed. Morever, steps may be added to the above described logic and still conform to the described implementations. Further, operations described herein may occur sequentially or certain operations may be processed in parallel. Yet further, operations may be performed by a single processing unit or by distributed processing units.

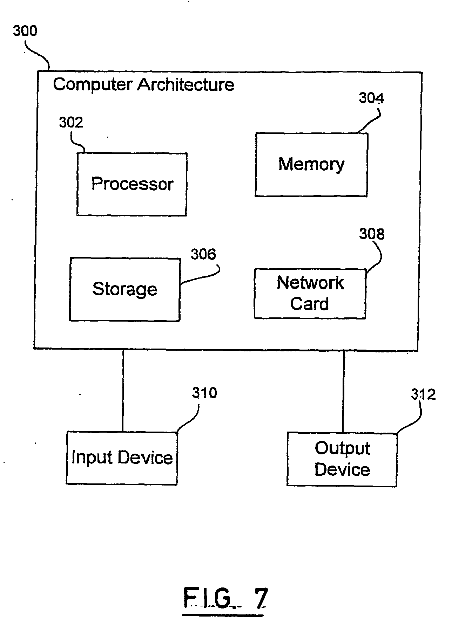

FIG. 7 illustrates one implementation of a computer architecture 300 of the network components, such as the central server and cache servers shown in FIG. 1. The architecture 300 may include a processor 302 (e.g., a microprocessor), a memory 304 (e.g., a volatile memory device), and storage 306 (e.g., a non-volatile storage, such as magnetic disk drives, optical disk drives, a tape drive, etc.). The storage 306 may comprise an internal storage device or an attached or network accessible storage. Programs in the storage 306 are loaded into the memory 304 and executed by the processor 302 in a manner known in the art. The architecture further includes a network card 308 to enable communication with a network. An input device 310 is used to provide user input to the processor 302, and may include a keyboard, mouse, pen-stylus, microphone, touch sensitive display screen, or any other activation or input mechanism known in the art. An output device 312 is capable of rendering information transmitted from the processor 302, or other component, such as a display monitor, printer, storage, etc.

## Claims

1. A method for maintaining data in a plurality of distributed caches, comprising:
maintaining a copy of an object in at least one cache, wherein multiple caches may have different versions of the object, and wherein the objects are capable of having modifiable data units;
maintaining update information at each cache for each object maintained in the cache, wherein the update information for each object in each cache indicates the object, the cache including the object, and indicates whether each data unit in the object was modified; and
after receiving a modification to a target data unit in one target object in one target cache, updating the update information for the target object and target cache to indicate that the target data unit is modified, wherein the update information for the target object indicates that the target data unit is not modified in any other cache;
wherein said caches may contain different versions of said object and said caches may deliver obsolete versions of said object to clients of said caches.

2. The method of claim 1, further performing after receiving the request to modify the data unit:
if the update information for the target object and target cache indicate that the target data unit is modified, then applying the received modification to the data unit in the target object in the target cache.

3. The method of claim 1 or claim 2, further performing after receiving the modification:
if the update information for the target object and target cache indicate that the target data unit is not modified, then determining whether another cache includes the target object and a most recent target data unit value;
if another cache does not include the most recent target data unit value, then applying the modification to the data unit in the target object in the target cache; and
updating the update information for the target object and target cache to indicate that the target data unit is modified, wherein the update information for the target object in any other cache indicates that the data unit is not modified.

4. The method of claim 1, 2 or 3, further performing after receiving the modification:
if the update information for the target object and target cache indicate that the target data unit is not modified, then determining whether another cache includes the target object and a most recent target data unit value; and
if another cache includes the most recent target data unit value, then retrieving the most recent target data unit value from the determined cache and updating the target object in the target cache with the retrieved most recent target data unit value.

5. The method of claim 4, further comprising:
after updating the target object in the target cache with the most recent target data unit value, applying the received modification to the data unit in the target object in the target cache; and
updating the update information for the target object and target cache to indicate that the target data unit is modified, wherein the update information for the target object in any other cache indicates that the data unit is not modified.

6. The method of claim 4, wherein a central server performs the steps of determining whether another cache includes the target object and the most recent target data unit value and retrieving the most recent target data unit value from the other cache, further comprising:
returning, with the central server, the most recent target data unit value, wherein the modification to the target data unit is applied to the target cache after the most recent target data unit value is applied to the target cache and, wherein one cache server is coupled to each cache, and wherein each cache server maintains update information for each object in the at least one cache to which the cache server is coupled, and wherein the central server maintains update information for each object in each cache.

7. The method of any preceding claim, further comprising:
maintaining invalidation information for each object in each cache, wherein the invalidation information for one object in one cache indicates whether each data unit in the object is valid or invalid;
if the invalidation information for the target object and target cache indicate that the target data unit is invalid, then determining from the update information the cache that includes a most recent target data unit value for the target object;
retrieving the most recent target data unit value from the determined cache and updating the target object in the target cache with the most recent target data unit value;
after updating the target object in the target cache with the most recent target data unit value, applying the received modification to the target data unit in the target object in the target cache;
updating the update information for the target object and target cache to indicate that the target data unit is modified;
updating the invalidation information for each cache that includes the target object to indicate that the target data unit is invalid; and
updating the update information for the target object in the determined cache to indicate that the data unit is not modified.

8. The method of claim 7, wherein a central server performs the steps of determining whether the invalidation information for the target object and target cache indicates that the target data unit is invalid, determining the cache that includes the target object and the most recent target data unit value, and retrieving the most recent target data unit value from the determined cache, further comprising:
returning, by the central server, the most recent target data unit value, wherein the modification to the target data unit is applied to the target cache after the most recent target data unit value is applied to the target object in the target cache.

9. A system for maintaining data, comprising:
a plurality of distributed caches;
means for maintaining a copy of an object in at least one cache, wherein the caches may have different versions of the object, and wherein the objects are capable of having modifiable data units;
means for maintaining update information at each cache for each object maintained in said cache, wherein the update information for each object in each cache indicates the object, the cache including the object, and indicates whether each data unit in the object was modified; and
means for updating the update information for the target object and target cache to indicate that the target data unit is modified after receiving a modification to a target data unit in one target object in one target cache, wherein the update information for the target object indicates that the target data unit is not modified in any other cache;
wherein said caches may contain different versions of said object and said caches may deliver obsolete versions of said object to clients of said caches.

10. A computer program comprising computer program code to, when loaded into a computer system and executed thereon, cause said computer system to perform all the steps of a method according to any one of claims 1 to 8.

## Patentansprüche

1. Verfahren zur Verwaltung von Daten in einer Vielzahl verteilter Cachespeicher, wobei das Verfahren Folgendes umfasst:
Verwalten einer Kopie eines Objekts in mindestens einem Cachespeicher, wobei sich in mehreren Cachespeichern verschiedene Versionen des Objekts befinden und die Objekte änderbare Dateneinheiten aufweisen können;
Verwalten einer Aktualisierungsinformation für jedes in dem Cachespeicher verwaltete Objekt in jedem Cachespeicher, wobei die Aktualisierungsinformation für jedes Objekt in jedem Cachespeicher das Objekt, den das Objekt beinhaltenden Cachespeicher und außerdem anzeigt, ob jede Dateneinheit im Objekt geändert wurde; und
Aktualisieren der Aktualisierungsinformation für das Zielobjekt und den Zielcachespeicher nach dem Empfangen einer Änderung für eine Zieldateneinheit in einem Zielobjekt in einem Zielcachespeicher, um anzuzeigen, dass die Zieldateneinheit geändert wurde, wobei die Aktualisierungsinformation für das Zielobjekt anzeigt, dass die Zieldateneinheit in keinem anderen Cachespeicher geändert wurde;
wobei die Cachespeicher verschiedene Versionen des Objekts enthalten können und die Cachespeicher veraltete Versionen des Objekts an Clients der Cachespeicher liefern können.

2. Verfahren nach Anspruch 1, das nach dem Empfangen der Anforderung zur Änderung der Dateneinheit ferner folgenden Schritt ausführt:
Einbinden der empfangenen Änderung in die Dateneinheit im Zielobjekt im Zielcachespeicher, wenn die Aktualisierungsinformation für das Zielobjekt und den Zielcachespeicher anzeigt, dass die Zieldateneinheit geändert wurde.

3. Verfahren nach Anspruch 1 oder Anspruch 2, das nach dem Empfangen der Änderung des Weiteren folgende Schritte ausführt:
Ermitteln, ob ein anderer Cachespeicher das Zielobjekt und einen aktuellsten Wert der zieldateneinheit beinhaltet, wenn die Aktualisierungsinformation für das Zielobjekt und den Zielcachespeicher anzeigt, dass die Zieldateneinheit nicht geändert wurde;
Einbinden der Änderung in die Dateneinheit im Zielobjekt im Zielcachespeicher, wenn kein anderer Cachespeicher den aktuellsten Wert der Zieldateneinheit beinhaltet; und
Aktualisieren der Aktualisierungsinformation für das Zielobjekt und den Zielcachespeicher, um anzuzeigen, dass die Zieldateneinheit geändert wurde, wobei die Aktualisierungsinformation für das Zielobjekt in jedem anderen Cachespeicher anzeigt, dass die Dateneinheit nicht geändert wurde.

4. Verfahren nach Anspruch 1, 2 oder 3, das nach dem Empfangen der Änderung ferner folgende Schritte ausführt:
Ermitteln, ob ein anderer Cachespeicher das Zielobjekt und einen aktuellsten Wert der Zieldateneinheit beinhaltet, wenn die Aktualisierungsinformation für das Zielobjekt und den Zielcachespeicher anzeigt, dass die zieldateneinheit nicht geändert wurde; und
Abrufen des aktuellsten Wertes der Zieldateneinheit von dem ermittelten Cachespeicher und Aktualisieren des Zielobjektes im Zielcachespeicher mit dem abgerufenen aktuellsten Wert der Zieldateneinheit, wenn ein anderer Cachespeicher den aktuellsten Wert der Zieldateneinheit beinhaltet.

5. Verfahren nach Anspruch 4, das ferner folgende Schritte umfasst:
Einbinden der empfangenen Änderung in die Dateneinheit im Zielobjekt im Zielcachespeicher nach dem Aktualisieren des Zielobjekts in dem Zielcachespeicher mit dem aktuellsten Wert der Zieldateneinheit; und
Aktualisieren der Aktualisierungsinformation für das Zielobjekt und den Zielcachespeicher, um anzuzeigen, dass die Zieldateneinheit geändert wurde, wobei die Aktualisierungsinformation für das Zielobjekt in jedem anderen Cachespeicher anzeigt, dass die Dateneinheit nicht geändert wurde.

6. Verfahren nach Anspruch 4, bei dem ein Zentralserver den Schritte zum Ermitteln, ob ein anderer Cachespeicher das Zielobjekt und den aktuellsten Wert der Zieldateneinheit beinhaltet, und den Schritt zum Abrufen des aktuellsten Wertes der Zieldateneinheit von dem anderen Cachespeicher ausführt, wobei das Verfahren ferner folgenden Schritt umfasst:
Zurückgeben des aktuellsten Wertes der Zieldateneinheit durch den Zentralserver, wobei die Änderung für die Zieldateneinheit in den Zielcachespeicher eingebunden wird, nachdem der aktuellste Wert der zieldateneinheit am Zielcachespeicher eingebunden wurde, und wobei ein Cachespeicher mit jedem Cachespeicher verbunden ist und wobei jeder Cachespeicher Aktualisierungsinformationen für jedes Objekt in dem mindestens einen Cachespeicher verwaltet, mit dem der Cachespeicher verbunden ist, und wobei der Zentralserver die Aktualisierungsinformation für jedes Objekt in jedem Cachespeicher verwaltet.

7. Verfahren nach einem der vorhergehenden Ansprüche, das ferner die folgenden Schritte umfasst:
Verwalten von Ungültigkeitsinformationen für jedes Objekt in jedem Cachespeicher, wobei die Ungültigkeitsinformation für ein Objekt in einem Cachespeicher anzeigt, ob jede Dateneinheit im Objekt gültig oder ungültig ist;
Ermitteln desjenigen Cachespeichers aus der Ungültigkeitsinformation, der einen aktuellsten Wert der Zieldateneinheit für das Zielobjekt beinhaltet, wenn die Ungültigkeitsinformation für das Zielobjekt und den Zielcachespeicher anzeigt, dass die Zieldateneinheit ungültig ist;
Abrufen des aktuellsten Wertes der zieldateneinheit vom ermittelten Cachespeicher und Aktualisieren des Zielobjekts im Zielcachespeicher durch den aktuellsten Wert der Zieldateneinheit;
Einbinden der abgerufenen Änderung in die Zieldateneinheit im Zielobjekt im Zielcachespeicher nach der Aktualisierung des Zielobjekts im Zielcachespeicher durch den aktuellsten Wert der Zieldateneinheit;
Aktualisieren der Aktualisierungsinformation für das Zielobjekt und den Zielcachespeicher, um anzuzeigen, dass die Zieldateneinheit geändert wurde;
Aktualisieren der Ungültigkeitsinformation für jeden Cachespeicher, der das Zielobjekt beinhaltet, um anzuzeigen, dass die Zieldateneinheit ungültig ist; und
Aktualisieren der Aktualisierungsinformation für das Zielobjekt im ermittelten Cachespeicher, um anzuzeigen, dass die Dateneinheit nicht geändert wurde.

8. Verfahren nach Anspruch 7, bei dem ein Zentralserver den Schritt zum Ermitteln, ob die Ungültigkeitsinformation für das zielobjekt und den Zielcachespeicher anzeigt, dass die Zieldateneinheit ungültig ist, den Schritt zum Ermitteln des Cachespeichers, der das Zielobjekt und den aktuellsten Wert der Zieldateneinheit beinhaltet, und den Schritt zum Abrufen des aktuellsten Wertes der Zieldateneinheit vom ermittelten Cachespeicher ausführt, wobei das Verfahren ferner den folgenden Schritt umfasst:
Zurückgeben des aktuellsten Wertes der Zieldateneinheit durch den Zentralserver, wobei die Änderung für die Zieldateneinheit in den Zielcachespeicher eingebunden wird, nachdem der aktuellste Wert der Zieldateneinheit am Zielobjekt im Zielcachespeicher eingebunden wurde.

9. System zur Verwaltung von Daten, das Folgendes umfasst:
eine Vielzahl verteilter Cachespeicher;
ein Mittel zum Verwalten einer Kopie eines Objekts in mindestens einem Cachespeicher, wobei sich in mehreren Cachespeichern verschiedene Versionen des Objekts befinden und die Objekte änderbare Dateneinheiten aufweisen können;
ein Mittel zum Verwalten einer Aktualisierungsinformation für jedes in dem Cachespeicher verwaltete Objekt in jedem Cachespeicher, wobei die Aktualisierungsinformation für jedes Objekt in jedem Cachespeicher das Objekt, den das Objekt beinhaltenden Cachespeicher und außerdem anzeigt, ob jede Dateneinheit im Objekt geändert wurde; und
ein Mittel zum Aktualisieren der Aktualisierungsinformation für das Zielobjekt und den Zielcachespeicher, um anzuzeigen, dass die Zieldateneinheit nach dem Empfangen einer Änderung für eine Zieldateneinheit in einem Zielobjekt in einem Zielcachespeicher geändert wurde, wobei die Aktualisierungsinformation für das Zielobjekt anzeigt, dass die Zieldateneinheit in keinem anderen Cachespeicher geändert wurde;
wobei die Cachespeicher verschiedene Versionen des Objekts enthalten können und die Cachespeicher veraltete Versionen des Objekts an Clients der Cachespeicher liefern können.

10. Computerprogramm, das einen Computerprogrammcode umfasst, der in ein Computersystem geladen und darin ausgeführt wird, um das Computersystem zum Ausführen aller Schritte eines Verfahrens nach einem der Ansprüche 1 bis 7 zu veranlassen.

## Revendications

1. Procédé destiné à maintenir des données dans des mémoires caches réparties, comprenant les étapes consistant à :
maintenir une copie d'un objet dans au moins une mémoire cache, où de multiples mémoires caches peuvent comporter différentes versions de l'objet et où les objets sont capables d'avoir des unités de données modifiables ;
maintenir des informations de mise à jour au niveau de chaque mémoire cache pour chaque objet maintenu dans la mémoire cache, où les informations de mise à jour pour chaque objet dans chaque mémoire cache indiquent l'objet, la mémoire cache comprenant l'objet, et indiquent si chaque unité de données dans l'objet a été modifiée, et
après réception d'une modification d'une unité de données cible dans un objet cible dans une mémoire cache cible, mettre à jour les informations de mise à jour pour l'objet cible et la mémoire cache cible pour indiquer que l'unité de données cible est modifiée, où les informations de mise à jour pour l'objet cible indiquent que l'unité de données cible n'est pas modifiée dans une autre mémoire cache quelconque,
où lesdites mémoires caches peuvent contenir différentes versions dudit objet et lesdites mémoires caches peuvent délivrer des versions obsolètes dudit objet à des clients desdites mémoires caches.

2. Procédé selon la revendication 1, exécutant, après la réception de la demande pour modifier l'unité de données, l'étape consistant à :
si les informations de mise à jour pour l'objet cible et la mémoire cache cible indiquent que l'unité de données cible est modifiée, appliquer alors la modification reçue à l'unité de données dans l'objet cible dans la mémoire cache cible.

3. Procédé selon la revendication 1 ou la revendication 2, exécutant en outre, après la réception de la modification, les étapes consistant à :
si les informations de mise à jour pour l'objet cible et la mémoire cache cible indiquent que l'unité de données cible n'est pas modifiée, déterminer alors si une autre mémoire cache comprend l'objet cible et une valeur d'unité de données cible la plus récente,
si une autre mémoire cache ne comprend pas la valeur d'unité de données cible la plus récente, appliquer alors la modification à l'unité de données dans l'objet cible dans la mémoire cible, et
mettre à jour les informations de mise à jour pour l'objet cible et la mémoire cache cible pour indiquer que l'unité de données cible est modifiée, où les informations de mise à jour pour l'objet cible dans une autre mémoire cache quelconque indiquent que l'unité de données n'est pas modifiée.

4. Procédé selon la revendication 1, 2 ou 3 exécutant en outre, après la réception de la modification, les étapes consistant à :
si les informations de mise à jour pour l'objet cible et la mémoire cache cible indiquent que l'unité de données cible n'est pas modifiée, déterminer alors si une autre mémoire cache comprend l'objet cible et une valeur d'unité de données cible la plus récente, et
si une autre mémoire cache comprend la valeur d'unité de données cible la plus récente, récupérer alors la valeur d'unité de données cible la plus récente de la mémoire cache déterminée et mettre à jour l'objet cible dans la mémoire cache cible avec la valeur d'unité de données cible la plus récente récupérée.

5. Procédé selon la revendication 4, comprenant en outre les étapes consistant à :
après la mise à jour de l'objet cible dans la mémoire cache cible avec la valeur d'unité de données cible la plus récente, appliquer la modification reçue à l'unité de données dans l'objet cible dans la mémoire cache cible, et
mettre à jour les informations de mise à jour pour l'objet cible et la mémoire cache cible pour indiquer que l'unité de données cible est modifiée, où les informations de mise à jour pour l'objet cible dans une autre mémoire cache quelconque indiquent que l'unité de données n'est pas modifiée.

6. Procédé selon la revendication 4, dans lequel un serveur central exécute les étapes consistant à déterminer si une autre mémoire cache comprend l'objet cible et la valeur d'unité de données cible la plus récente et à récupérer la valeur d'unité de données la plus récente à partir de l'autre mémoire cache, comprenant en outre :
la fourniture en retour, par le biais du serveur central, de la valeur d'unité de données cible la plus récente, où la modification de l'unité de données cible est appliquée à la mémoire cache cible après que la valeur d'unité de données cible la plus est appliquée à la mémoire cache cible et, où un serveur de mémoire cache est couplé à chaque mémoire cache, et où chaque serveur de mémoire cache maintient des informations de mise à jour pour chaque objet dans la au moins une mémoire cache à laquelle le serveur de mémoire cache est couplé, et où le serveur central maintient des informations de mise à jour pour chaque objet dans chaque mémoire cache.

7. Procédé selon l'une quelconque des revendications précédentes, comprenant en outre les étapes consistant à :
maintenir des informations d'invalidation pour chaque objet dans chaque mémoire cache, où les informations d'invalidation pour un objet dans une mémoire cache indiquent si chaque unité de données d'un objet est valide ou invalide,
si les informations d'invalidation pour l'objet cible et la mémoire cache cible indiquent que l'unité de données cible est invalide, alors déterminer à partir des informations de mise à jour la mémoire cache qui comprend une valeur d'unité de données cible la plus récente pour l'objet cible,
récupérer la valeur d'unité de données cible la plus récente de la mémoire cache déterminée et mettre à jour l'objet cible dans la mémoire cache cible avec la valeur d'unité de données cible la plus récente,
après la mise à jour de l'objet cible dans la mémoire cache cible avec la valeur d'unité de données cible la plus récente, appliquer la modification reçue à l'unité de données cible dans l'objet cible dans la mémoire cache cible,
mettre à jour les informations de mise à jour pour l'objet cible et la mémoire cache cible pour indiquer que l'unité de données cible est modifiée,
mettre à jour les informations d'invalidation pour chaque mémoire cache qui comprend l'objet cible pour indiquer que l'unité de données cible est invalide, et
mettre à jour les informations de mise à jour pour l'objet cible dans la mémoire cache déterminée pour indiquer que l'unité de données n'est pas modifiée.

8. Procédé selon la revendication 7, dans lequel un serveur central exécute les étapes consistant à déterminer si les informations d'invalidation pour l'objet cible et la mémoire cache cible indiquent que l'unité de données cible est invalide, à déterminer la mémoire cache qui comprend l'objet cible et la valeur d'unité de données cible la plus récente, et à récupérer la valeur d'unité de données cible la plus récente à partir de la mémoire cache déterminée, comprenant en outre les étapes consistant à :
fournir en retour, par le biais du serveur central, la valeur d'unité de données cible la plus récente,
où la modification de l'unité de données cible est appliquée à la mémoire cache après que la valeur d'unité de données cible la plus récente est appliquée à l'objet cible dans la mémoire cache cible.

9. Système destiné à maintenir des données, comprenant :
une pluralité de mémoires caches réparties,
un moyen destiné à maintenir une copie d'un objet dans au moins une mémoire cache, où les mémoires caches peuvent comporter différentes versions de l'objet, et où les objets sont capables de comporter des unités de données modifiables,
un moyen destiné à maintenir des informations de mise à jour au niveau de chaque mémoire cache pour chaque objet maintenu dans ladite mémoire cache, où les informations de mise à jour pour chaque objet dans chaque mémoire cache indiquent l'objet, la mémoire cache comprenant l'objet et indiquent si chaque unité de données dans l'objet a été modifiée, et
un moyen destiné à mettre à jour les informations de mise à jour pour l'objet cible et la mémoire cache cible pour indiquer que l'unité de données cible est modifiée après la réception d'une modification d'une unité de données cible dans un objet cible dans une mémoire cache cible, où les informations de mise à jour pour l'objet cible indiquent que l'unité de données cible n'est pas modifiée dans une autre mémoire cache quelconque,
où lesdites mémoires caches peuvent contenir différentes versions dudit objet et lesdites mémoires caches peuvent délivrer des versions obsolètes dudit objet à des clients desdites mémoires caches.

10. Programme informatique comprenant un code de programme informatique destiné à, lorsqu'il est chargé dans un système informatique et exécuté sur celui-ci, amener ledit système informatique à réaliser toutes les étapes d'un procédé selon l'une quelconque des revendications 1 à 8.
